(19) Europäisches Patentamt

European Patent Office

Office européen des brevets

(11) EP 0 812 075 B1

(12) EUROPEAN PATENT SPECIFICATION

(45) Date of publication and mention
of the grant of the patent:
**12.04.2006 Bulletin 2006/15**

(51) Int Cl.:
*H04B 10/18* (2006.01)    *H04B 10/08* (2006.01)

(21) Application number: **97303261.8**

(22) Date of filing: **13.05.1997**

(54) **Optical fibre transmission systems including dispersion measurement and compensation**

Faseroptische Übertragungssysteme mit Dispersionsmessung und -kompensation

Systèmes de transmission à fibres optiques avec mesure de compensation de la dispersion

(84) Designated Contracting States:
**DE FR GB NL SE**

(30) Priority: **07.06.1996 US 660565**
**20.07.1996 GB 9615284**

(43) Date of publication of application:
**10.12.1997 Bulletin 1997/50**

(73) Proprietor: **Nortel Networks Limited**
**St.Laurent, Quebec H4S 2A9 (CA)**

(72) Inventor: **Roberts, Kim Bryron**
**Welwyn Garden City,**
**Herts AL8 7DL (GB)**

(74) Representative: **Hermele, Daniel Stephen et al**
**Nortel Networks**
**Intellectual Property Law Group**
**London Road**
**Harlow, Essex CM17 9NA (GB)**

(56) References cited:
**EP-A- 0 140 853     EP-A- 0 700 178**

## Description

Field of the Invention

This invention relates to optical transmission systems, to control systems for optical transmission systems, to dispersion measurement systems, and to elements for receiving or processing signals in optical transmission systems, and to methods of transmitting data along an optical path.

Background of the invention

The distance between optical terminals of optical fibre transmission systems is limited by the optical power that can be launched into optical fibre by optical transmitters of the optical terminals, the loss and dispersion of optical fibre interconnecting the optical terminals, and the sensitivity of optical receivers of the optical terminals. Where the distance between desired end points of an optical fibre transmission system exceeds the maximum distance between optical terminals, optoelectronic repeaters have been provided. Each optoelectronic repeater comprises an optical receiver for converting the optical signal, to an electrical signal, electronics for regenerating the electrical signal, and an optical transmitter for converting the regenerated electrical signal to an optical signal for transmission to the next optoelectronic repeater or to a terminal of the system. There are two main techniques for multiplexing signals in such systems, which operate by wavelength division or time division.

In Wavelength Division Multiplexed (WDM) optical fibre transmission systems which use optoelectronic repeaters, the optical signals are optically demultiplexed at each repeater, so that the signal at each distinct wavelength is coupled to a respective optical receiver for conversion to a respective electrical signal, each respective signal is applied to a respective optical transmitter operating at a distinct wavelength, and the transmitted signals are optically multiplexed for transmission to the next optoelectronic repeater or to a terminal of the system

As the line rates of optical fibre transmission systems increase into the 2.5 Gbps to 10 Gbps range, higher speed electronics are needed in optoelectronic repeaters, and this increases the cost of optoelectronic repeaters.

Optical amplifiers, for example Erbium Doped Fibre Amplifiers (EDFAs), amplify optical signals directly without converting them to electrical signals. Because EDFAs do not require high speed regeneration electronics, they can be cheaper than optoelectronic repeaters for high speed optical fibre transmission systems.

Moreover, in WDM optical fibre transmission systems, the EDFAs can amplify optical signals at multiple wavelengths without optically demultiplexing them, thereby avoiding the costs of optical multiplexing and demultiplexing, and the costs of multiple optical receivers, multiple regeneration circuits and multiple optical transmitters. Consequently, EDFAs can also be cheaper than optoelectronic repeaters for WDM systems. However, degradation by noise and dispersion effects builds up when optical amplifiers are used. Thus a regenerator may be necessary after several optical amplifier stages, to rebuild the data signal and remove the noise and dispersion degradation.

EP-A-0140853 discloses a method of measuring intermodal dispersion in a multimode optical fibre.

Disregarding intermodal dispersion which only occurs in multimode fibre (not used in practice for high capacity systems), dispersion, also known as Group Velocity Dispersion, in fibre at least, occurs as a result of two mechanisms:

1 *intramodal dispersion* - within a single mode different frequencies travel along the fibre at different speeds;

2 *material dispersion* - the phase velocity of plane waves in glass varies with frequency.

Dispersion is the derivative of the time delay of the optical path with respect to wavelength. The effect of dispersion is measured in picoseconds arrival time spread per nanometre line width' per kilometre length (ps nm$^{-1}$ km$^{-1}$). The magnitude of intramodal and material dispersions both vary with wavelength, and at some frequencies the two effects act in opposite senses. It is generally possible, on a given single mode fibre, to find a wavelength around which there is negligible dispersion, or, conversely, to design a fibre to have minimum dispersion at a desired wavelength. References to dispersion herein will mean the sum total of group velocity dispersion effects.

Dispersion in optical fibre presents serious problems when using light sources whose spectrum is non-ideal for example broad or multispectral-line, or when high data rates are required, e.g. over 2 GB/s. This problem has previously been addressed, at least partially, in four ways. Firstly, by operating at or close to the optical frequency at which the dispersion is a minimum, for example at a wavelength of 1.3 micron in conventional silica fibre. The frequency does not generally correspond with the frequency of minimum transmission loss and attempts to modify the fibre to shift its frequency of minimum dispersion usually result in some loss penalty. This solution has limitations for two reason. Firstly manufacturing variations will always occur. Secondly, a non linearity called four wave mixing seriously degrades WDM signals near the dispersion zero of one piece of fibre. Accordingly, it may be preferable to operate in a given region of dispersion which may not include the dispersion zero.

The second way of overcoming the problem is to use a source with a near ideal narrow linewidth spectrum. The limits for improvement in this respect have been reached since at higher bit rates, the Kerr effect becomes significant. This is where the index of refraction varies with intensity, which causes self phase modulation, or cross phase modulation. The resulting frequency redistribution means that dispersive degradation increases again.

Thirdly, dispersion compensators have been used to equalise the dispersion with an element of equal and opposite dispersion. Such dispersion compensators may take the form of length of fibre, a Mach Zehnder interferometer, an optical resonator, or a Bragg reflector. Some of these compensators can give a variable, controllable amount of compensation.

A fourth technique is to change the modulation at the transmitting end. On example is discussed in EP-A-0643 497. Dispersion produces an FM to AM conversion effect which can facilitate bit detection and thereby extend transmission distance without controlling or compensating dispersion. The dispersion causes shifting of adjacent signal components of different wavelengths, resulting in either energy voids or energy overlaps at the bit transitions. Constructive interference in an overlap causes a positive peak in the optical signal, while a void produces a negative peak. These positive and negative peaks represent an AM signal which may be detected to reproduce the original bit stream.

The document proposes the additional step of adjusting the output power of one or more of the inline amplifiers to further stabilise the dispersion-induced optical signal energy voids and overlaps and thereby further improve the detection thereof. This method requires difficult precision engineering and so is impractical for commercial exploitation.

With the different types of dispersion-shifted fibre, dispersion compensating fibre, and dispersion-compensating filters that could make up a given link, determining the dispersion of a link is no longer the simple operation of multiplying the length in km by the 17 ps/nm/km dispersion characteristic of standard single mode fibre. Moreover, when there are optical switches or controllable optical dispersion compensators in the link the dispersion can change as a function of time.

There are several laboratory test instruments available that measure this dispersion, on a static basis. However, they are large, expensive and cannot be used while a signal is present at the same wavelength. Some such instruments require both ends of the fibre be at the same location, and so can only be used to test components of a system before installation. Certainly they are not suitable for incorporation into any element of a practical transmission system.

One attempt to control the effects of dispersion in a high speed transmission system is known from EP-A-0700 178, as shown in figure 1. Reference numeral 41 is an optical transmitter, 42 is an optical receiver, 43 is an optical fibre, 44 is a tuneable light source, 45 is a tuneable filter, 46 and 47 are optical amplifiers, 48 is an optical detector, 49 is a drive circuit, 50 is a tuneable filter, 51 is a repeater, 52 is a sweep controller, and 53 is a transmission characteristic measuring section.

The drive circuit 49 is controlled by the sweep controller 52 to sweep the emission wavelength of the tuneable light source 44. For example, when the tuneable light source 44 is constructed from the tuneable semiconductor laser, sweeping can be accomplished by varying the currents Ip and Id; in the case of a semiconductor laser of other configuration, sweeping of the emission wavelength can be accomplished by continuously varying the temperature. The optical signal with the thus swept emission wavelength is transmitted along the optical fibre 43 and via the repeaters 51, and is detected by the optical detector 48 of the optical receiver 42, where the received result is applied to the transmission characteristic measuring section 53 which measures the transmission characteristic between the optical transmitter 11 and the optical receiver 12. Based on the result of the transmission characteristic measurement, the emission wavelength of the tuneable light source 44 and the wavelength transmission characteristics of the tuneable filters 45 and 50 are so set as to achieve the best transmission characteristic.

Variable dispersion compensators (not shown) may also be controlled to find an optimum measured transmission characteristic.

The transmission characteristic measuring section 53 may be constructed to measure the transmission characteristic by measuring bit error rates (BER). Alternatively, it may be contructed to measure the transmission characteristic using an eye pattern.

Since the eye pattern opens wide when the transmission characteristic is good, the emission wavelength of the tuneable light source 44 may be adjusted so that the eye pattern opens widest. As an adjusting means in this case, control may be performed manually while observing the eye pattern, or alternatively, automatic control by means of computer processing may be employed.

An alternative way of measuring the bit-error rate is to measure the Q value (electrical SNR). The Q value is expressed using the signal level difference (= signal amplitude) between emission and no emission as the numerator and the sum of the standard deviations of noise during emission and during no emission as the denominator. When a Gaussian distribution is assumed for the noise distribution, the bit-error rate given by the Q value agrees with the minimum-value of the actually measured bit-error rate. Other methods, such as measuring the transmitted waveform and using specifications of equal bit-error rate curves, may also be employed.

However, such measurements of transmission characteristics do not give a direct measurement of dispersion, since many other factors affect the bit error rate, the eye pattern and the Q value. There is no straightforward way of eliminating the effects of these factors. Therefore, accurate values of dispersion cannot be derived by these methods outside a laboratory.

A second problem with this system is that the sweeping technique causes a degraded BER, (a figure of $10^{-11}$ is quoted). This would be unacceptable in many working systems.

EP-A-0684709 discloses an optical communication system which also uses a transmission characteristic such as the eye margin or the bit error rate to optimise the dispersion. The dispersion optimising system comprises adjustable dispersion compensating fibres to compensate for dispersion in system fibres. The amount of dispersion introduced by the dispersion compensating fibres is varied depending upon the amount of compensation required as determined from the eye margin or the bit error rate.

US 4 677 618 by IBM, addresses the problem of relative delay between different wavelength sources for the specialised case of transmitting data words in parallel using optical sources of different wavelengths for different bits of the word. The relative delay is the integral of the dispersion between respective wavelengths. The relative delay is measured at the receiving end then used to restore the original timing alignment of the bits of each word by adding appropriate compensating delays. There is no measurement of the dispersion, i.e. the derivative of the time delay of the optical path with respect to wavelength.

## Summary of the Invention

The present invention seeks to improve on such techniques.

According to one aspect of the invention, there is provided an optical transmission system for transmitting data along an optical path, the transmission system comprising: a controllable element; characterised in that the optical transmission system further comprises means for determining a group velocity dispersion of at least part of the optical path, said dispersion determining means comprising means for determining timing jitter in a signal after passage of said signal along said at least part of the optical path, and means for deriving a group velocity dispersion value from the timing jitter; and means for controlling the element in the transmission system in dependence on the determined group velocity dispersion value.

Measuring the dispersion directly enables better control of dispersion compensators, or other system elements, or improved monitoring and fault isolation. Measuring the dispersion rather than resulting degradation on the eye and BER enables a margin of performance of the optical path to be assessed under realistic zero error conditions. A further advantage arises because the optical path is often provided by a different supplier to the transmission equipment. This means it can be crucial to distinguish degradation caused by dispersion in the optical path from that caused by other optical problems or other parts of the transmission equipment.

According to another aspect of the invention there is provided a control system for a controllable element of an optical transmission system, comprising means for controlling the controllable element of the optical transmission system, characterised in that the control system further comprises means for determining the group velocity dispersion of at least a part of an optical path of the transmission system, said dispersion determining means comprising means for determining timing jitter in a transmitted signal after passage of said signal along said at least part of the optical path, and means for deriving a group velocity dispersion value from the timing jitter, and wherein the control means is operable in dependence on the determined group velocity dispersion value.

According to another aspect of the invention, there is provided a dispersion measurement system characterised in that the system is for measuring a group velocity dispersion of at least part of an optical path of an optical transmission system, the measurement system comprising at least a portion of an element of the transmission system for receiving or processing a signal passed along the at least part of the optical path, said portion of said element comprising dispersion determining means comprising means for determining timing jitter in the signal after passage of said signal along said at least part of the optical path.

Intergrating portions of the dispersion measurement means with portions of existing elements in the transmission system enables a reduction in the total amount of hardware required. Furthermore, it enables measurements under realistic operating conditions, at the operating wavelengths, while data traffic is present, which is particularly important where variable dispersion elements are present.

A preferred feature involves the dispersion value being used to control dispersion compensating means or transmitters in the transmission system. This enables better control of such system elements, and easier design of control algorithms using linear control, than the case where values used to control elements are dependent on numerous system parameters.

Another preferred feature provides a monitoring means for comparing the optical dispersion value to a threshold. This enables dispersion problems to be flagged and isolated easily, to facilitate adjustment of variable compensators, or repair or replacement, by less skilled staff, either when commissioning or operating the transmission system. This has not been possible up to now. Where the threshold is exceeded measures may be taken to alter the data traffic, to avoid or reduce bit errors.

Centralised fault monitoring, or control of the transmission system can be facilitated by sending the measured value to a remote monitoring location. This can reduce costs. Measuring the timing jitter in the signal is advantageous as it can be accurately measured, and is linearly related to dispersion, as it results from variation in transmitted wavelength.

Preferably the timing jitter is derived from a clock recovered from the received signal. This takes advantage of equipment already provided in the receiver, thus saving costs.

Preferably the jitter is derived from the phase difference between the recovered clock and the output of a phase locked loop locked to the recovered clock. This takes advantage of circuitry already provided in the receiver and the regenerator, thus saves costs, which is particularly significant for high speed circuitry.

The phase locked loop which is already used to provide a clock for a regenerator is preferred over the loop in the clock recovery circuit, because the regenerator loop may already be provided with filtering which passes only low frequencies. This means it will not respond to jitter above such frequencies. Thus such jitter will appear as a phase difference, and thus can be separated from the clock signal.

Preferably the measuring system also comprises a means for applying a variation in wavelength in the form of a predetermined pattern, to the signal before it passes along the part of the optical path to be measured. This enables easier extraction of the resulting timing jitter from the received signal, and thus more accurate measurement.

Preferably the wavelength variation is also used for monitoring or altering other parameters of the transmission system. Dual use saves costs, enables the dispersion measurement function to be retrofitted to existing systems, and minimises interference such as beating, which may be caused by added wavelength variations.

Preferably the wavelength variation is a low frequency dither signal for suppressing stimulated Brillouin scattering. Such variation may already be used in a transmission system particularly a high speed system, and can conveniently be reused for measuring dispersion.

Preferably a correlation is carried out between the measured timing jitter and the predetermined pattern. This enables more accurate measurement.

Preferably the pattern is asymmetric and the sign of the dispersion can be determined. This enables more information about the dispersion to be obtained, which is useful in particular in determining which way to adjust a variable compensator, to reduce the dispersion.

Preferably the dither pattern is pseudo random. This can minimise any interference the pattern may cause to the data traffic, or to other elements in the system.

Clearly, these preferred features can be combined in any appropriate way, in any aspect of the invention.

Another aspect of the invention provides a method of transmitting data along an optical path in an optical transmission system, characterised in that the method comprises: the step of determining a group velocity dispersion in at least part of the optical path at the same time as the data is being transmitted, said step of determining a group velocity dispersion comprising determining timing jitter in a signal comprising the transmitted data after passage of said signal along said at least part of the optical path, and deriving a group velocity dispersion value from the timing jitter; and using the determined group velocity dispersion value for monitoring whether it exceeds a threshold or for controlling data flow, or for controlling a dispersion compensating device or method..

The invention will now be described by way of example, and to show how the same may be put into effect, with reference to the figures.

## Brief Description of the drawings

| Figure 1 | shows a particular prior art transmission system showing an attempt to control the effects of dispersion; |
| Figure 2 | shows a transmission system according to the invention; |
| Figure 3 | shows system as in Figure 2, and further including means for adding a predetermined data pattern; |
| Figure 4 | shows a system as in Figure 2 and including means for adding a predetermined pattern by modulating the data; |
| Figure 5 | shows a system as in Figure 2, and including means for varying the wavelength of the optical signal; |
| Figure 6 | shows a more detailed schematic diagram of the transmitter shown in Figure 5; |
| Figure 7 | shows a schematic diagram of a receiver for use in the system of Figure 2. |
| Figure 8 | shows a more detailed schematic diagram of the clock recovery circuit of Figure 7; |
| Figure 9 | shows a more detailed schematic diagram of the regenerator for use in the system of Figure 2; |
| Figure 10 | shows a regenerator for use in the system of Figure 2 including filtering means for deriving the low frequency content of the recovered data; |
| Figure 11 | shows a more detailed schematic diagram of the correlation function of Figure 9. |

## Detailed Description

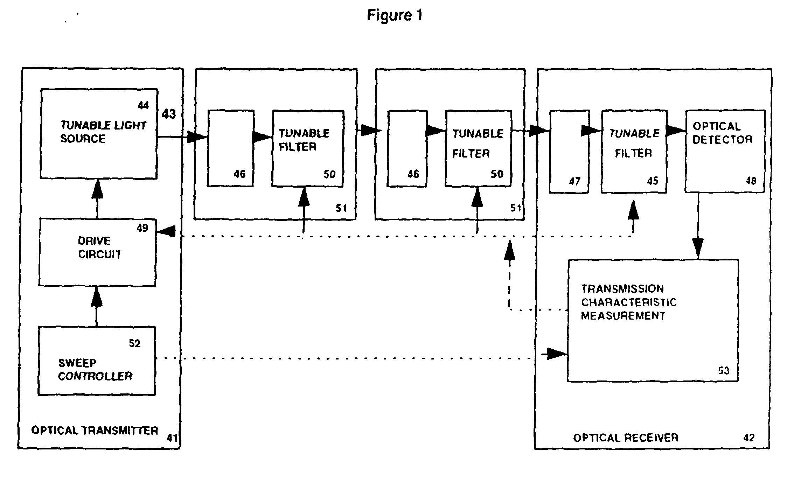

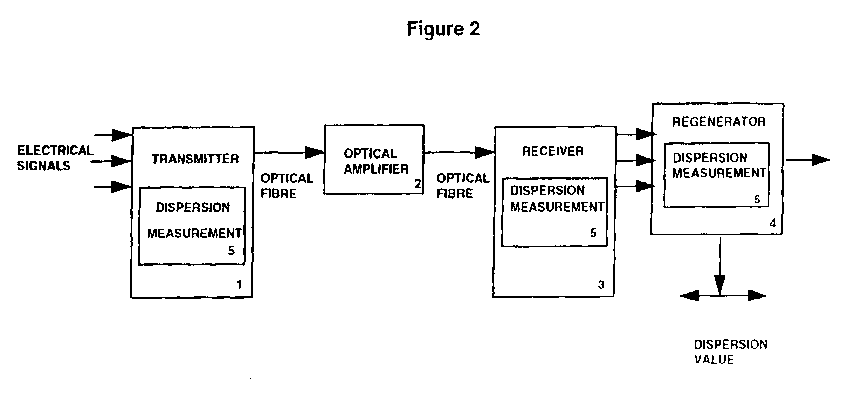

Figure 2 shows elements of an optical transmission system, comprising a transmitter (1) optical amplifier (2), receiver (3), regenerator (4) and elements of a dispersion measurement system (5) incorporated in the transmitter the regenerator and the receiver.

Electrical signals are multiplexed and converted into optical form for transmission along optical fibre. One or more optical amplifier stages may be necessary before the receiver is reached.

The regenerator may process electrical signals received from the receiver for further transmission optically, or for use in electrical form. Here, the term regenerator covers variants with electrical demultiplexing functions, such as a terminal or an add/drop multiplexer (mux).

The dispersion measurement means may be separate from, or incorporated into the receiver or the amplifier or any other element in the transmission path.

Various arrangements of the transmitter are shown in Figures 3, 4, 5 and 6. Details of the receiver are shown in Figures 7 and 8. Details of the regenerator and, parts of the dispersion measurement system are shown in Figures 9 and 10.

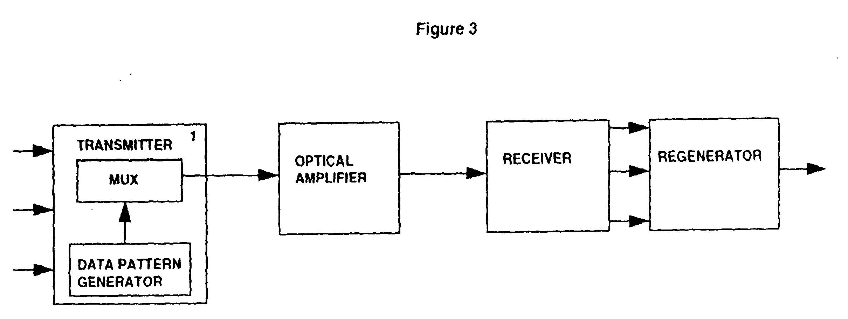

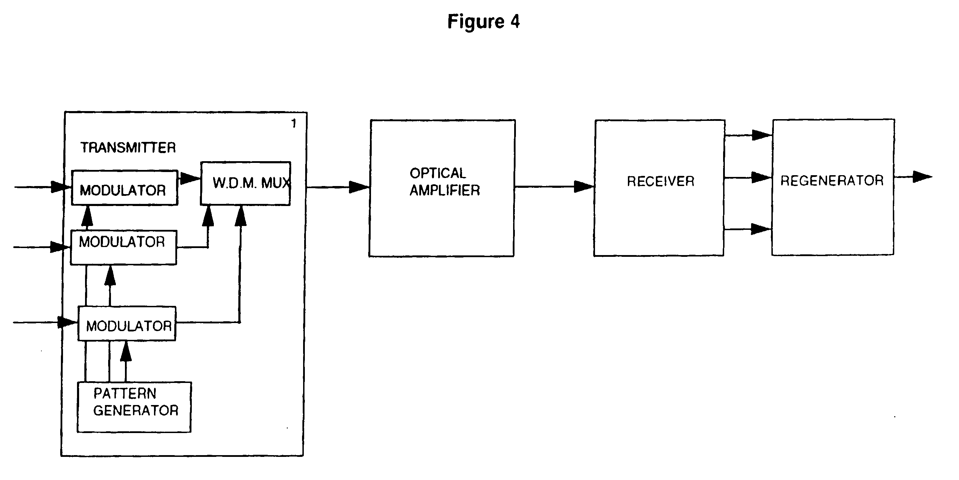

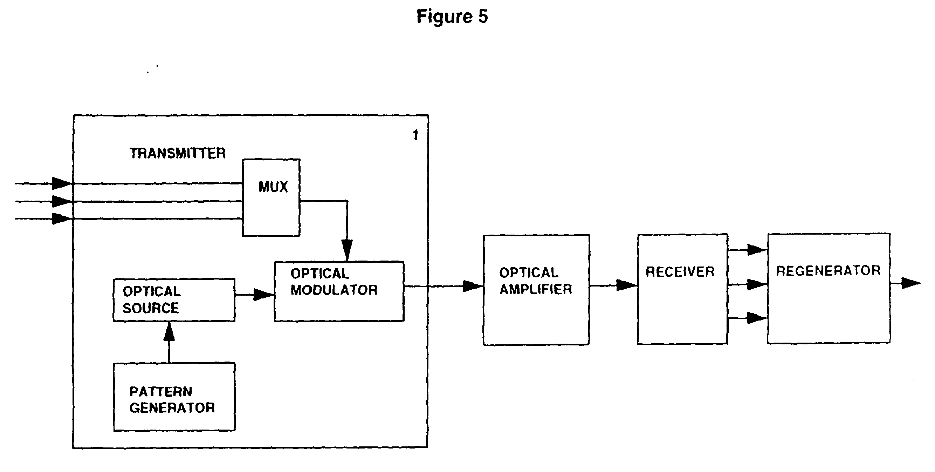

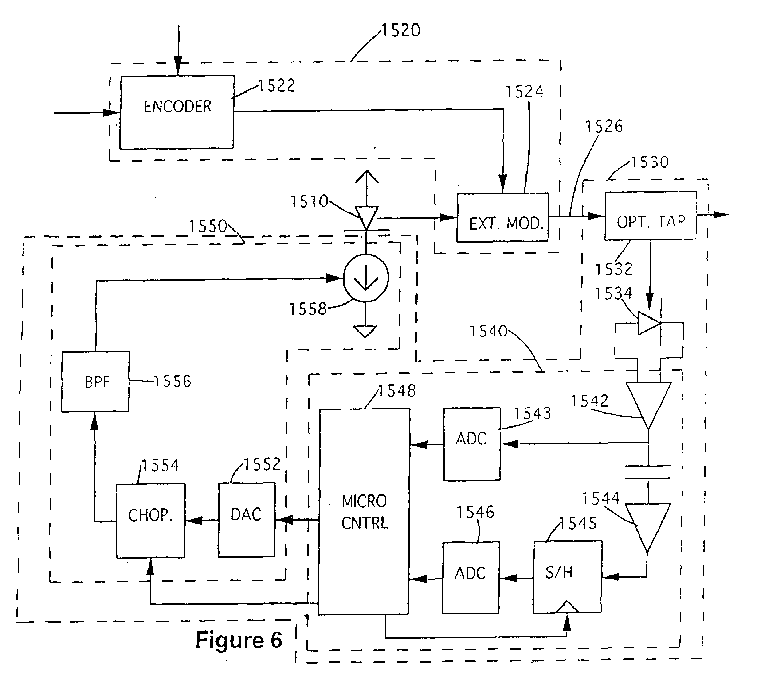

Three particular ways of achieving dispersion measurement are shown. Firstly the measurement system can take advantage of patterns in the normal data traffic. Secondly it may use predetermined patterns impressed on the data traffic (with reference to Figures 3 and 4). Thirdly it may use patterns impressed on the optical carrier (with reference to Figures 5 and 6).

Figure 3 shows one possible arrangement of the transmitter 1 for use in the system of Figure 2. A predetermined pattern is generated and fed to a data multiplexer for transmission together with other data traffic.

A variation is shown in Figure 4. Here, the pattern generator output is used to modify one or more of the data channels prior to multiplexing. The modulators can be optical or be implemented in two stages; a digital electronic stage to impress the pattern on the data traffic, followed by an optical modulation stage. This enables processing to be carried out at lower data rates, and thus components are likely to be cheaper.

For a WDM system as shown in Figure 4, it is advantageous to provide different patterns for the different channels. This enables the dispersion value to be ascertained at the different wavelengths used by the channels. If different patterns are used for each channel, these dispersion values can be obtained without needing to control or sequence the pattern generator. Measurement is facilitated if the patterns are orthogonal, so that they can be more easily distinguished at a subsequent correlation stage.

If the patterns are phase independent orthogonal patterns, then the different patterns generated for each of the channels need not be in phase with each other. This makes for simpler construction of separate units at the transmitter. In Figure 5 a further alternative transmitter 1 is shown for use in the system of Figure 2. Here the pattern generator is used to modulate an optical carrier, which is subsequently externally modulated by the data traffic. Direct modulation by the data traffic of the optical source, usually a laser, is possible, but not usually used where high speeds are required. It would be possible to use external modulation for the pattern, either before or after the data traffic external modulation stage. Advantages of using direct modulation for the pattern include the reduced cost of the parts required, particularly where low frequencies are involved, and the amount of wavelength variation which can be achieved.

Figure 6 is a block schematic diagram of the optical transmitter of Figure 5 for adding the predetermined pattern, in the form of a dither. The optical transmitter comprises an optical source in the form of a semiconductor laser 1510, a signal modulation arrangement 1520 in the form of a line encoder 1522 and an external optical modulator 1524, and a dither modulation arrangement 1530. The dither modulation arrangement 1530 comprises an optical tap 1532, an opto-electronic conversion device in the form of a PIN diode 1534, a calculation arrangement 1540, and a dither amplitude control arrangement 1550. The calculation arrangement 1540 comprises a transimpendance amplifier 1542, a first analog to digital converter 1543, an AC amplifier 1544, a sample and hold circuit 1545, a second analog to digital converter 1546, and a microcontroller 1548. The dither amplitude control arrangement 1550 comprises a digital to analog converter 1552, a chopper 1554, a bandpass filter 1556 and a voltage controlled current source 1558.

The digital to analog converter 1552 applies an analog signal to a signal input of the chopper 1554, the analog signal having a signal level corresponding to a digital code supplied to the digital to analog converter 1552 by the microcontroller 1548. The microcontroller 1548 repeatedly applies a 64 bit Miller encoded pseudorandom sequence to a control input of the chopper 1554 to modulate the analog signal at 64 kbps. The modulated signal is filtered by the bandpass filter 1556 and applied to a control input of the voltage controlled current source 1558 to modulate a bias current of the semiconductor laser 1510. Consequently, the semiconductor laser 1510 emits an optical signal modulated by a 64 kbps low modulation index dither signal. This gives a dither with predominant frequency content between 20 and 40 kHz.

The dither modulated optical signal is applied to the external optical modulator 1524 which responds to a high speed (approximately 2.5 Gbps) electrical data signal supplied by the line encoder 1522 to superimpose a high speed, high modulation index data modulation on the dither modulation of the optical signal. The twice modulated optical signal is coupled to an output fibre 1526 of the optical transmitter 1500.

The optical tap 1532 couples approximately 3% of the modulated optical signal on the output fibre 1526 to the PIN diode 1534. The PIN diode 1534 converts the tapped optical signal to a photocurrent, and the transimpedance amplifier 1542 amplifies and converts the photocurrent to a voltage. The first analog to digital converter 1543 converts the analog voltage to digital code which estimates the total optical power of the tapped optical signal, and this digital code is supplied to the microcontroller 1548. The AC amplifier 1544 is AC coupled to the transimpedance amplifier 1542 and provides further amplification of an AC component of the voltage. The sample and hold circuit 1545 samples the amplified AC voltage. The second analog to digital converter 1546 converts the analog samples to digital codes which are supplied to the microcontroller 1548. The microcontroller 1548 correlates the digitally encoded AC signal with the pseudorandom sequence applied to the chopper 1554 to compute the amplitude of the dither modulation in the tapped optical signal, compares the dither modulation amplitude to the estimated total power of the tapped optical signal to compute the dither modulation depth, and adjusts the digital code applied to the digital to analog converter to fix the dither modulation depth at a known and precisely controlled value. The A.M to F.M. conversion characteristic of each particular laser is calibrated within the memory associated with the microcontroller, to improve the precision of the resulting F.M.. The characteristic can be measured easily for any laser.

How to control the chirp parameter, or wavelength change property of the transmitter is shown for example in U.S application serial number 08-450841 by Rolland and Cartledge.

All the patterns and circuitry for generating the dither may be present for monitoring or altering other parameters of the system such as suppression of stimulated Brillouin scattering. An example of this is disclosed in US-A-5513029 by Roberts and Habel. Thus the present invention can make use of such transmitters with little or no modification. Furthermore the same circuitry can be used for noise monitoring for example.

The pattern may be Miller encoded to help shape the spectral shape. It may be pseudorandom so as to minimise any correlation with other useful information in the transmitted signal, to avoid interference such as beating. The pattern may be asymmetric so as to enable the sign of dispersion to be determined, as will be explained below.

How the receiver side of the system extracts the patterns and derives the dispersion value will now be described.

To determine the dispersion in a length of the optical path, the signal at the end of this length is processed to determine the resulting jitter, caused by the data pattern induced wavelength variation, using the following equation:

$$\Delta t = D \cdot \Delta \lambda + k \cdot \Delta \lambda + noise$$

Where:

D    is dispersion in picoseconds per nanometre for a given optical span and a given wavelength;

$\Delta \lambda$    is the R.M.S. change in wavelength caused by the data pattern;

$\Delta t$    is the R.M.S. jitter resulting from the effect of dispersion on the source wavelength variation;

k    is a factor representing the jitter owing to AM to PM conversion in the receiver, of the AM portion of the source dither, mainly due to non linear phase response of amplifier stages in the receiver.

The amount of amplitude modulation at the transmitter side can be selected, to achieve a compromise between the requirements of accuracy of measurement, and minimizing undesired side effects such as jitter and eye closure. A larger amplitude can give better accuracy, but with worse side effects. In a 2.5 GB per second externally modulated system, 0.6% R.M.S. amplitude variation produced 700 MHz of frequency variation, though the precise relationship is laser dependent. The resulting jitter for a 100 km length of single mode fibre is in the order of 10 picoseconds. This represents one fortieth of the clock period, and so cannot easily be measured directly, but is obtainable using correlation techniques.

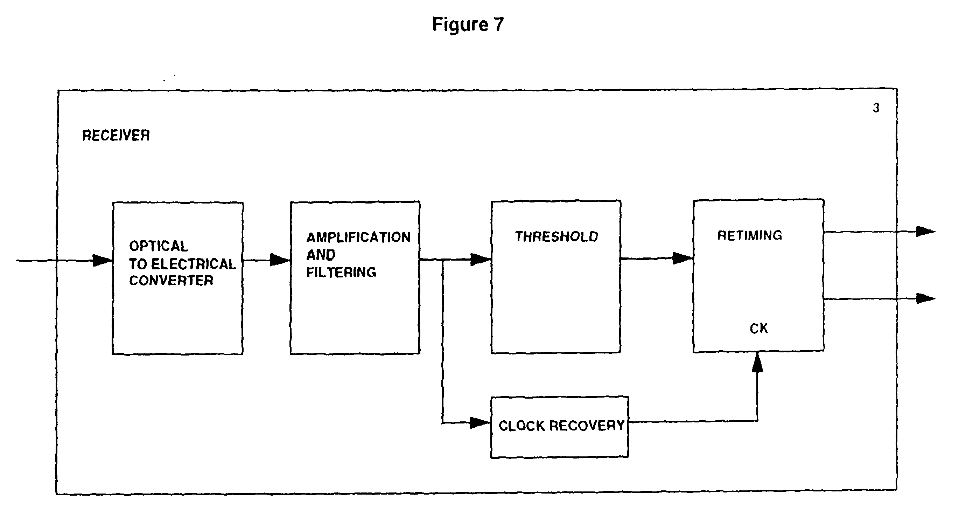

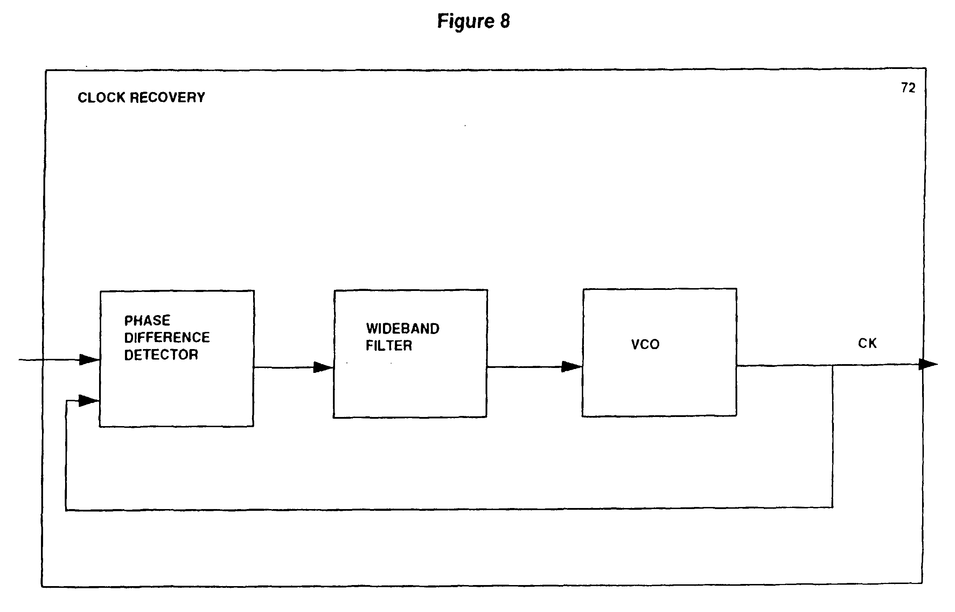

Figure 7 shows a schematic diagram of a receiver (3) for use in the system of Figure 2. It may serve as the end point of the link, or as a part of a repeater. It includes an optical to electrical converter (70) an amplification and filtering stage (71), a clock recovery stage (72), a threshold stage (73) and a retiming stage (74). The clock recovery stage is shown in more detail in Figure 8. It is well known how to put each of these stages into practice, and so it is not necessary to describe particular circuits.

The outputs of the receiver include digital data signals and clock signals.

The clock signals may be divided down so as to reduce the clock rate. Correspondingly, the data signals may be demultiplexed or converted from serial to parallel format. Measures such as these, for slowing the clock rate, make the data signals easier and cheaper to process.

Means for measuring the dispersion in the optical path can be incorporated in the receiver, though this has not been illustrated. An optical tap at the input to the receiver could feed a small proportion, for example 5% of the signal to measurement circuitry (not shown). Such measurement circuitry could also use signals taken from any of the receiver stages shown in Figure 7.

Figure 8 shows a typical clock recovery circuit using a phase locked loop. An alternative possibility is to make use of a SAW filter (not shown). Again, in principle, the measurement of dispersion can us signals from various stages in the clock recovery circuit.

The bandwidth of the phase locked loop shown in Figure 8 is typically 200 to 5000 times less than the bit rate of the data traffic. In a specific example of a 2.5 GB per second system, the clock recovery phase locked loop bandwidth might be 1 MHz. This is designed to enable it to track substantially all incoming jitter, so as not to degrade the B.E.R. This means it will pass the jitter caused by the predetermined pattern, without significant attenuation. This is in contrast with the phase locked loop of the regenerator, as will be described later.

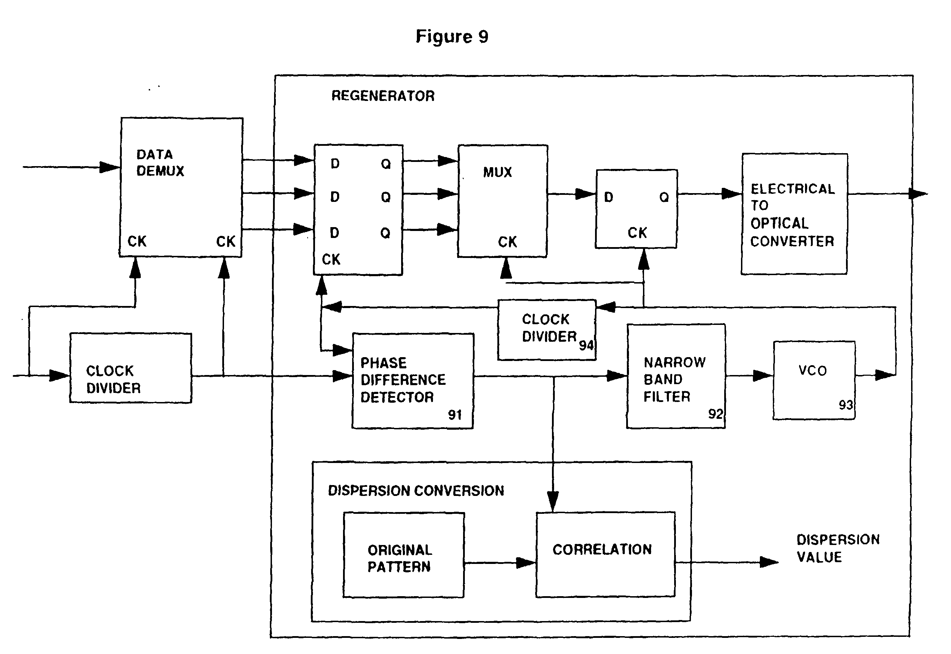

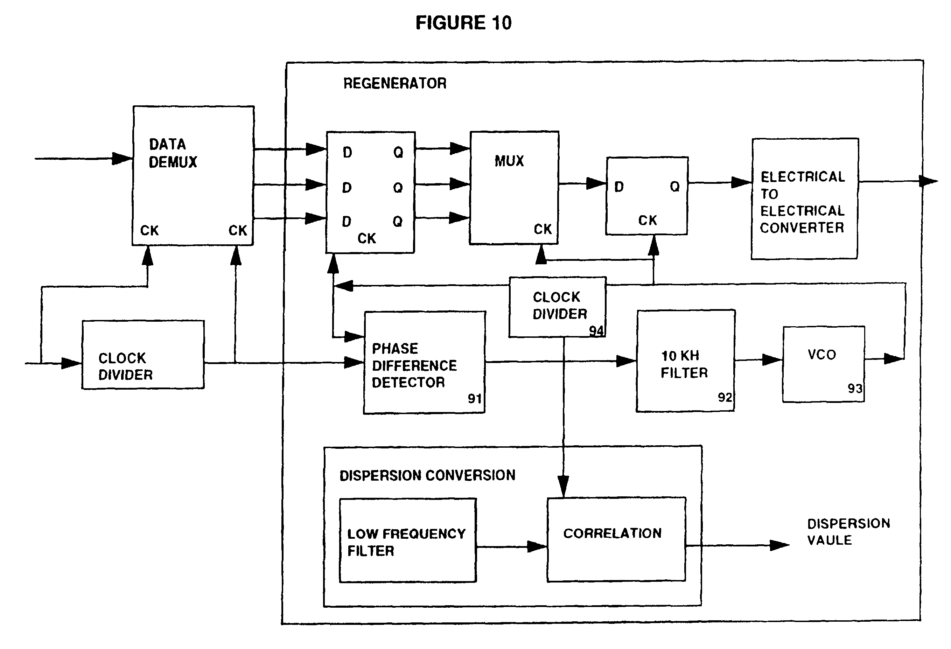

Figures 9 and 10 show examples of regenerators, where the dispersion is derived from the recovered clock. The timing jitter is separated using a phase locked loop in the regenerator. A correlation means then converts this jitter into a dispersion value.

The two alternative regenerator circuits shown in Figures 9 and 10 differ only in that the dispersion conversion means shown in Figure 9 uses an original pattern generator, while that of Figure 10 derives the pattern from the recovered data.

In Figure 9 a separate clock to that used by the receiver, is generated, and locked to the incoming clock from the receiver, using a phase locked loop. This loop comprises a phase difference detector 91, a narrow band filter 92, a voltage controlled oscillator (VCO) 93 and a clock divider 94.

Some of the timing jitter on the recovered clock fed into the regenerator notably the bulk of the jitter resulting from the pattern, will not pass through the phase locked loop, which typically has a 10 kHz low pass bandwidth. This is designed to be high enough for good acquisition behaviour, without passing on jitter. Therefore this portion of the timing jitter will appear as a phase difference between the clock output by the VCO, and the recovered clock input from the receiver. This difference is detected by the phase difference detector 91.

To obtain a value for dispersion, this timing jitter should be correlated with the original pattern to remove parts of the timing jitter caused by other parts of the transmitted signal, and noise. This will leave the timing jitter caused by the pattern, timing jitter caused by the phase response of circuitry between the optical path and the measurement means, (principally amplification stages) and some noise.

Particularly for higher bit rates, e.g. 2.5 GB per second, up to 10 or even 40 GB per second, the allowable range of dispersion becomes smaller, and thus the measurement of the dispersion must become more accurate.

If it is desired to determine not only when dispersion thresholds are exceeded in a particular part of the optical path, but also performance margins, or how close to the ends of the allowable dispersion range is a particular part of the optical path, then even greater accuracy of dispersion measurement is needed. Furthermore, control of dispersion compensators in particular, may require greater accuracy, particularly if they have complex responses, or narrow ranges of linear response.

For accurate timing measurements, using some form of correlation with a predetermined pattern of wavelength variation can give good results. The timing measurements are so small that noise is a significant factor, which needs to be filtered out. Furthermore, in the receiver, and anywhere between the optical path and the measurement means, distortions and noise may be introduced. Finally, the wavelength variations, and consequential timing jitter should be small enough to avoid interference with data traffic.

The cost of providing the high speed, high accuracy processing necessary to make such a correlation can be reduced by incorporating the correlation means into a regenerator, as shown in Figure 9 or Figure 10. This is particularly so if the regenerator already includes digital signal processing circuitry.

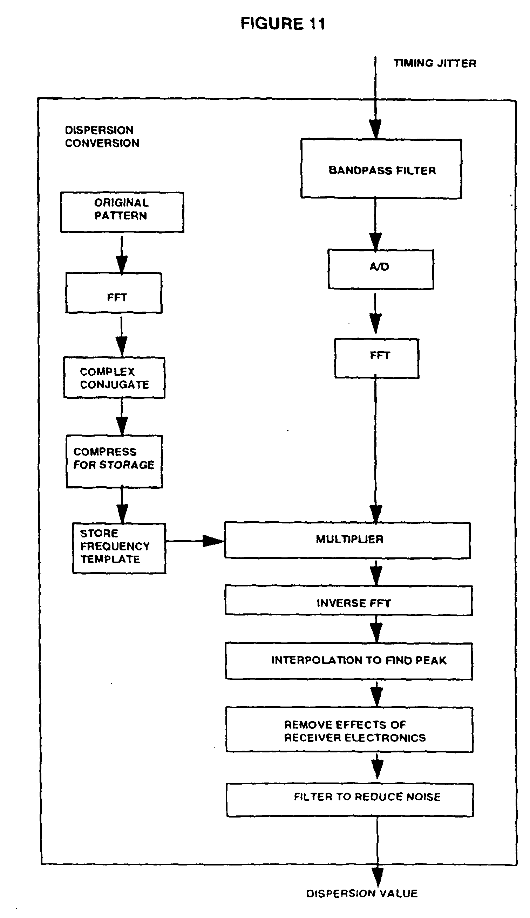

A more detailed schematic diagram showing an example of the correlation to separate the desired part of the timing jitter is shown in Figure 11.

Figure 11 shows in functional terms various stages in converting the timing jitter in the form of a clock phase difference signal, into dispersion value. In practice, some or all of the stages could be implemented using a single chip digital signalling processor (DSP).

In principle the clock phase difference signal could be transmitted elsewhere, and the conversion process to obtain a dispersion value, could be carried out in some means provided elsewhere. This possibility is encompassed in the present invention. The disadvantage with such an arrangement is the additional hardware which may be required in transmitting the clock phase difference before converting it into a dispersion value. The additional hardware may be required because the clock phase difference signal would typically require a 200 K Byte per second transmission channel, well beyond the bandwidth of a currently available modem.

Nevertheless there may be advantages in carrying out the conversion elsewhere, such as at the transmitter, at a dispersion compensator, or at a central control or monitoring location, if this enables several DSP converters to be replaced by a single central processsor, handling the conversion for a plurality of measurement locations. This could enable a reduction in the total amount of hardware for example.

As shown in Figure 11, the first stage is a bandpass filter, so as to restrict the signal to be processed, to only the frequencies of interest, according to the type of wavelength variation induced at the transmitter. After conversion to digital data, a fast Fourrier Transform (FFT) is carried out, to enable processing in the frequency domain. In principle, correlation can be carried out in the time domain, but frequency domain is usual.

A multiplication stage is then provided, to multiply the FFT output with a stored frequency template representing the pattern to which the timing jitter is being correlated. How this template is derived will be described later.

The result of the multiplication is put through an inverse FFT process to return to the time domain. A series of complex samples is output, ready for interpolation. Interpolation improves accuracy, but may not be necessary depending on the number of samples and the accuracy required.

The interpolation stage involves interpolating between complex samples to determine a peak correlation. This can be implemented in various ways. Many algorithrns have been developed, particularly for radar use. Which of these well known methods will give best results depends on the particular system characteristics, in particular on the amount of noise, the number of samples relative to the pattern, the shape of the auto correlation of the pattern, the desired accuracy available computing power, and desired speed of obtaining a result. Also, the determination of sign of the dispersion affects the interpolation as described below.

To find the sign of the dispersion, an asymmetric pattern must be used if phase invariant detection is used, as described above. The peak detection needs to find the largest absolute value and report the corresponding signed value, which gives the sign of the dispersion.

Next, there is a compensation stage to remove the effects of phase variations caused by circuitry in the receiver and other intervening stages, principally any amplifier stages, which will have a notable phase response curve as amplitude varies, known as AM to PM conversion.

These effects can be determined by calibration at or before installation, and a correction factor stored, for use each time a conversion is made.

Finally, a noise reduction filter may be employed before or after the receiver circuitry compensation, to reduce noise not removed by the correlation process.

Generating the frequency template for the above correlation process may be carried out based on an original predetermined pattern as shown in Figure 11, or may be based on data patterns extracted from the transmitted data, as indicated in Figure 10. The former technique has the advantages of enabling preprocessing and not using up transmission bandwidth. Also, it does not require demultiplexing of data which may involve additional hardware.

In either case, the pattern is converted into the frequency domain by an FFT, then the complex conjugate is derived, to prepare for the multiplication. Compression for storage may then be necessary. It is then ready as a template for multiplying with successive frequency domain representations of the clock phase difference.

The amplitude of the part of the timing jitter which correlates to the impressed pattern will be directly proportional to the dispersion, subject to the effects of receiver electronics, and noise.

In principle the timing jitter which is measured and converted, could be derived from the data rather than the recovered clock. An original impressed data pattern could be correlated with this measured data timing jitter.

It would also be conceivable to measure and use the timing jitter caused not by any impressed data pattern, but by the normal data traffic.

The pattern for the correlation template would need to be extracted from this normal data traffic as shown in Figure 10. For such an embodiment, the timing jitter could be measured either from the recovered clock, as shown in Figure 10, or from the data (not shown).

This would enable the measurements to be taken without requiring additional hardware at a transmitter side, thus retrofitting in particular is facilitated. Furthermore, there would be no danger of interference, or bandwidth reduction if no special pattern is transmitted. However, the generation of the template may require considerably greater processing resources, and the correlation may be less accurate if for example it relies on extracting a particular band of low frequencies (to facilitate the correlation) and there happened to be little response in those frequencies at a given time. These drawbacks may reduce with time as processing power becomes less expensive.

Other variations will be apparent to a skilled reader which fall within the scope of the claims. The invention is not limited to examples described.

## Claims

1. An optical transmission system for transmitting data along an optical path, the transmission system comprising a controllable element, wherein the optical transmission system further comprises means (5) for determining a group velocity dispersion of at least part of the optical path, and means for controlling the element in the transmission system in dependence on the determined group velocity dispersion value, **characterised in that** said dispersion determining means comprises means for determining timing jitter in a signal after passage of said signal along said at least part of the optical path, and means for deriving a group velocity dispersion value from the timing jitter.

2. The transmission system of claim 1, wherein the means (5) for determining the group velocity dispersion is at least partially incorporated into the element or another element of the transmission system.

3. The transmission system of claim 1 or 2, wherein the controllable element comprises a dispersion compensating means or a transmitter (1).

4. The transmission system of claim 1 or 2, wherein the controllable element comprises a monitoring means for comparing the dispersion value to a threshold.

5. The transmission system of claim 4, wherein the monitoring means is arranged to alter data traffic on the optical path if the threshold is exceeded.

6. A control system for a controllable element of an optical transmission system, comprising means for controlling the controllable element of the optical transmission system, wherein the control system further comprises means (5) for determining the group velocity dispersion of at least a part of an optical path of the transmission system, and wherein the control means is operable in dependence on the determined group velocity dispersion value, **characterised in that** said dispersion determining means comprises means for determining timing jitter in a transmitted signal after passage of said signal along said at least part of the optical path, and means for deriving a group velocity dispersion value from the timing jitter.

7. The control system of claim 6, wherein the means for determining the group velocity dispersion comprises at least a portion of an element of the transmission system for receiving or processing the signal passed along the optical path.

8. The control system of claim 6 or 7, wherein the means for deriving a group velocity dispersion value comprises means for correlating the timing jitter with at least a portion of the transmitted signal.

9. The control system of claim 8, wherein the dispersion determining means (5) comprises means for impressing a pattern on the transmitted signal, and the correlating means correlates the timing jitter with this pattern.

10. The control system of claim 9, wherein the means for impressing a pattern comprises means for applying a low frequency dither signal to an optical transmitter to suppress stimulated Brillouin scattering.

11. The control system of claim 9 or 10, wherein the means for impressing a pattern is arranged to impress an asymmetric pattern and the correlating means is arranged to determine the sign of the dispersion value.

12. A dispersion measurement system wherein the system is for measuring a group velocity dispersion of at least part of an optical path of an optical transmission system, the measurement system comprising at least a portion of an element of the transmission system for receiving or processing a signal passed along the at least part of the optical path, **characterised in that** said portion of said element comprises dispersion determining means comprising means for determining timing jitter in the signal after passage of said signal along said at least part of the optical path.

13. The measurement system of claim 12, wherein the element comprises a receiver (3), and the receiver (3) comprises a means for recovering a clock from the signal, wherein the timing jitter is derived from the recovered clock.

14. The measurement system of claim 12, wherein the element comprises a receiver (3) and a regenerator (4), the regenerator comprising a phase locked loop locked to a recovered clock output by the receiver (3), wherein the timing jitter is derived by obtaining the phase difference between the recovered clock and an output of the phase locked loop

15. The measurement system of any of claims 12 to 14, comprising means for deriving a group velocity dispersion value from the timing jitter.

16. The measurement system of any of claims 12 to 15, comprising means for applying a variation in wavelength to the signal passed along said at least part of the optical path, said variation in wavelength being in the form of a predetermined pattern.

17. The measurement system of claim 16, wherein the means for applying the wavelength variation is also arranged to monitor or alter other parameters of the transmission system.

18. The measurement system of claim 16 or 17, wherein the wavelength variation is a low frequency dither signal for suppressing stimulated Brillouin scattering.

19. The measurement system of any of claims 16 to 18, comprising means for correlating between measured timing jitter and the predetermined pattern.

20. The measurement system of any of claims 16 to 19, wherein the pattern is asymmetric and the system comprises means for determining the sign of dispersion.

21. The measurement system of any of claims 16 to 20, wherein the pattern is pseudo random.

22. The measurement system of any of claims 16 to 21 for use with a wavelength division multiplexed transmission system comprising a plurality of wavelength multiplexed channels, wherein said wavelength variation applying means is arranged to apply different predetermined patterns of variation of wavelength to the different channels.

23. A method of transmitting data along an optical path in an optical transmission system, wherein the method comprises the steps of:

determining a group velocity dispersion in at least part of the optical path at the same time as the data is being transmitted, and

using the determined group velocity dispersion value for monitoring whether it exceeds a threshold or for controlling data flow, or for controlling a dispersion compensating device or method. said method **characterised in that** said step of determining a group velocity dispersion comprises determining timing jitter in a signal comprising the transmitted data after passage of said signal along said at least part of the optical path, and deriving a group velocity dispersion value from the timing jitter.

**Patentansprüche**

1. Optisches Übertragungssystem zur Übertragung von Daten entlang eines optischen Pfades, wobei das Übertragungssystem ein steuerbares Element umfasst, wobei das optische Übertragungssystem weiterhin Einrichtungen (5) zur Feststellung einer Gruppengeschwindigkeits-Dispersion von zumindest einem Teil des optischen Pfades und Einrichtungen zur Steuerung des Elementes in dem Übertragungssystem in Abhängigkeit von dem festgestellten Gruppengeschwindigkeits-Dispersionwert umfasst, **dadurch gekennzeichnet, dass** die die Dispersion feststellende Einrichtung Einrichtungen zur Feststellung eines Zeittakt-Jittereffektes in einem Signal nach dem Durchlaufen des Signals entlang des zumindest einen Teil des optischen Pfades und Einrichtungen zur Ableitung eines Gruppengeschwindigkeits-Dispersionswertes aus dem Zeittakt-Jittereffekt umfasst.

2. Übertragungssystem nach Anspruch 1, bei dem die Einrichtung (5) zur Feststellung der Gruppengeschwindigkeits-Dispersion zumindest teilweise in das Element oder ein anderes Element des Übertragungssystems eingefügt ist.

3. Übertragungssystem nach Anspruch 1 oder 2, bei dem das steuerbare Element eine Dispersions-Kompensationseinrichtung oder einen Sender (1) umfasst.

4. Übertragungssystem nach Anspruch 1 oder 2, bei dem steuerbare Element eine Überwachungseinrichtung zum Vergleich des Dispersionswertes mit einem Schwellenwert umfasst.

5. Übertragungssystem nach Anspruch 4, bei dem die Überwachungseinrichtung zur Änderung von Datenverkehr auf dem optischen Pfad angeordnet ist, wenn der Schwellenwert überschritten ist.

6. Steuersystem für ein steuerbares Element eines optischen Übertragungssystems, mit Einrichtungen zur Steuerung des steuerbaren Elementes des optischen Übertragungssystems, bei dem das Steuersystem weiterhin Einrichtungen (5) zur Feststellung der Gruppengeschwindigkeits-Dispersion von zumindest einem Teil des optischen Pfades des Übertragungssystems umfasst, und bei dem die Steuereinrichtung in Abhängigkeit von dem festgestellten Gruppengeschwindigkeits-Dispersionswert betreibbar ist, **dadurch gekennzeichnet, dass** die die Dispersion feststellende Einrichtung Einrichtungen zur Feststellung des Zeittakt-Jittereffektes in einem übertragenen Signal nach dem Hindurchlaufen des Signals durch den zumindest einen Teil des optischen Pfades und Einrichtungen zur Ableitung eines Gruppengeschwindigkeits-Dispersionswertes aus dem Zeittakt-Jittereffekt umfasst.

7. Steuersystem nach Anspruch 6, bei dem die Einrichtung zur Feststellung der Gruppengeschwindigkeits-Dispersion zumindest einen Teil eines Elementes des Übertragungssystems zum Empfang oder zur Verarbeitung des Signals umfasst, das entlang des optischen Pfades weitergeleitet wird.

8. Steuersystem nach Anspruch 6 oder 7, bei dem die Einrichtung zur Ableitung eines Gruppengeschwindigkeits-Dispersionswertes Einrichtungen zur Korrelation des Zeittakt-Jittereffektes mit zumindest einem Teil des übertragenen Signals umfasst.

9. Steuersystem nach Anspruch 8, bei dem die die Dispersion feststellende Einrichtung (5) Einrichtungen zum Aufprägen eines Musters auf das übertragene Signal umfasst, und dass die Korrelationseinrichtung den Zeittakt-Jittereffekt mit diesem Muster korreliert.

10. Steuersystem nach Anspruch 9, bei dem die Einrichtung zur Aufprägung eines Musters Einrichtungen zur Zuführung eines niederfrequenten Schwankungssignals an einen optischen Sender zur Unterdrückung der stimulierten Brillouin-Streuung umfasst.

11. Steuersystem nach Anspruch 9 oder 10, bei dem die Einrichtung zur Aufprägung eines Musters so angeordnet ist, dass sie ein asymmetrisches Muster aufprägt, und dass die Korrelationseinrichtung zur Feststellung des Vorzeichens des Dispersionswertes angeordnet ist.

12. Dispersions-Messsystem, bei dem das System zur Messung einer Gruppengeschwindigkeits-Dispersion von zumindest einem Teil eines optischen Pfades eines optischen Übertragungssystems dient, wobei das Messsystem zumindest einen Teil eines Elementes des Übertragungssystems zum Empfang oder zur Verarbeitung eines Signals umfasst, das entlang des zumindest einen Teils des optischen Pfades weitergeleitet wird, **dadurch gekennzeichnet, dass** der Teil des Elementes Dispersions-Feststellungseinrichtungen umfasst, die Einrichtungen zur Feststellung eines Zeittakt-Jittereffektes in dem Signal nach dem Durchlaufen des Signals entlang des zumindest einen Teils des optischen Pfades umfasst.

13. Messsystem nach Anspruch 12, bei dem das Element einen Empfänger (3) umfasst, und bei dem der Empfänger (3) eine Einrichtung zur Rückgewinnung eines Taktes auf dem Signal umfasst, wobei der Zeittakt-Jittereffekt aus dem rückgewonnenen Takt abgeleitet wird.

14. Messsystem nach Anspruch 12, bei dem das Element einen Empfänger (3) und einen Regenerator (4) umfasst, wobei der Regenerator eine Phasen-Regelschleife umfasst, die auf einen rückgewonnenen Takt verriegelt ist, der von dem Empfänger (3) abgegeben wird, wobei der Zeittakt-Jittereffekt durch Gewinnen der Phasendifferenz zwischen dem zurückgewonnenen Takt und einem Ausgang der Phasen-Regelschleife abgeleitet wird.

15. Messsystem nach einem der Ansprüche 12-14, mit Einrichtungen zur Ableitung eines Gruppengeschwindigkeits-Dispersionswertes aus dem Zeittakt-Jittereffekt.

16. Messsystem nach einem der Ansprüche 12-15, mit Einrichtungen zum Aufbringen einer Änderung der Wellenlänge auf das Signal, das entlang des zumindest einen Teils des optischen Pfades weitergeleitet wird, wobei die Änderung der Wellenlänge die Form eines vorgegebenen Musters hat.

17. Messsystem nach Anspruch 16, bei dem die Einrichtung zur Anwendung der Wellenlängen-Änderung weiterhin so angeordnet ist, dass andere Parameter des Übertragungssystems überwacht oder geändert werden.

18. Messsystem nach Anspruch 16 oder 17, bei dem die Wellenlängen-Änderung ein niederfrequentes Schwankungssignal zur Unterdrückung der stimulierten Brillouin-Streuung ist.

19. Messsystem nach einem der Ansprüche 16-18, mit Einrichtungen zur Korrelation zwischen dem gemessenen Zeittakt-Jittereffekt und dem vorgegebenen Muster.

20. Messsystem nach einem der Ansprüche 16-19, bei dem das Muster asymmetrisch ist und das System Einrichtungen zur Feststellung des Vorzeichens der Dispersion umfasst.

21. Messsystem nach einem der Ansprüche 16-20, bei dem das Muster pseudo-zufällig ist.

22. Messsystem nach einem der Ansprüche 16-21, zur Verwendung in einem Wellenlängen-Multiplex-Übertragungssystem, das eine Vielzahl von Wellenlängen-Multiplex-Kanälen umfasst, wobei die eine Wellenlängen-Änderung aufbringende Einrichtung so angeordnet ist, dass sie unterschiedliche vorgegebene Muster der Änderung der Wellenlänge auf die unterschiedlichen Kanäle anwendet.

23. Verfahren zur Übertragung von Daten entlang eines optischen Pfades in einem optischen Übertragungssystem, wobei das Verfahren die folgenden Schritte umfasst:

Feststellen einer Gruppengeschwindigkeits-Dispersion in zumindest einem Teil des optischen Pfades zu der gleichen Zeit, zu der die Daten übertragen werden, und
Verwenden des festgestellten Gruppengeschwindigkeits-Dispersionswertes zur Überwachung, ob dieser einen Schwellenwert übersteigt, oder zur Steuerung des Datenflusses, oder zur Steuerung einer Dispersions-KompensationsEinrichtung oder eines Dispersions-Kompensations-Verfahrens, wobei das Verfahren **dadurch gekennzeichnet ist, dass** der Schritt der Feststellung einer Gruppengeschwindigkeits-Dispersion die Feststellung eines Zeittakt-Jittereffektes in einem Signal, das die ausgesandten Daten nach dem Durchlauf des Signals durch den zumindest einen Teil des optischen Pfades umfasst, und die Ableitung eines Gruppengeschwindigkeits-Dispersionswertes aus dem Zeittakt-Jittereffekt umfasst.

## Revendications

1. Un système de transmission optique pour transmettre des données le long d'un chemin optique, le système de transmission comprenant un élément pouvant être commandé, dans lequel le système de transmission optique comprend en outre un moyen (5) pour déterminer une dispersion de vitesse de groupe d'au moins une partie du chemin optique, et un moyen pour commander l'élément dans le système de transmission sous la dépendance de la valeur de dispersion de vitesse de groupe déterminée, **caractérisé en ce que** le moyen de détermination de dispersion comprend un moyen pour déterminer une gigue temporelle dans un signal après passage de ce signal le long de ladite partie du chemin optique, et un moyen pour calculer une valeur de dispersion de vitesse de groupe d'après la gigue temporelle.

2. Le système de transmission de la revendication 1, dans lequel le moyen (5) pour déterminer la dispersion de vitesse de groupe est au moins partiellement incorporé dans l'élément ou un autre élément du système de transmission.

3. Le système de transmission de la revendication 1 ou 2, dans lequel l'élément pouvant être commandé comprend un moyen de compensation de dispersion ou un émetteur (1).

4. Le système de transmission de la revendication 1 ou 2, dans lequel l'élément pouvant être commandé comprend un moyen de surveillance pour comparer la valeur de dispersion avec un seuil.

5. Le système de transmission de la revendication 4, dans lequel le moyen de surveillance est agencé pour modifier un trafic de données sur le chemin optique si le seuil est dépassé.

6. Un système de commande pour un élément pouvant être commandé dans un système de transmission optique, comprenant un moyen pour commander l'élément pouvant être commandé dans le système de transmission optique, dans lequel le système de commande comprend en outre un moyen (5) pour déterminer une dispersion de vitesse de groupe d'au moins une partie d'un chemin optique du système de transmission, et dans lequel le moyen de commande peut fonctionner sous la dépendance de la valeur de dispersion de vitesse de groupe déterminée, **caractérisé en ce que** le moyen de détermination de dispersion comprend un moyen pour déterminer une gigue temporelle dans un signal transmis, après passage de ce signal le long de ladite partie du chemin optique, et un moyen pour calculer une valeur de dispersion de vitesse de groupe d'après la gigue temporelle.

7. Le système de commande de la revendication 6, dans lequel le moyen pour déterminer la dispersion de vitesse de groupe comprend au moins une partie d'un élément du système de transmission destiné à recevoir ou à traiter le signal transmis le long du chemin optique.

8. Le système de commande de la revendication 6 ou 7, dans lequel le moyen pour calculer une valeur de dispersion de vitesse de groupe comprend un moyen pour corrélér la gigue temporelle avec au moins une partie du signal transmis.

9. Le système de commande de la revendication 8, dans lequel le moyen de détermination de dispersion (5) comprend un moyen pour imposer une configuration au signal transmis, et le moyen de corrélation corrèle la gigue temporelle avec cette configuration.

10. Le système de commande de la revendication 9, dans lequel le moyen pour imposer une configuration comprend un moyen pour appliquer un signal d'oscillation de fréquence basse à un émetteur optique pour atténuer la diffusion de Brillouin stimulée.

11. Le système de commande de la revendication 9 ou 10, dans lequel le moyen pour imposer une configuration est agencé pour imposer une configuration asymétrique, et le moyen de corrélation est agencé pour déterminer le signe de la valeur de dispersion.

12. Un système de mesure de dispersion dans lequel le système est destiné à mesurer une dispersion de vitesse de groupe d'au moins une partie d'un chemin optique d'un système de transmission optique, le système de mesure comprenant au moins une partie d'un élément du système de transmission pour recevoir ou traiter un signal transmis le long de l'au moins une partie du chemin optique, **caractérisé en ce que** ladite partie de l'élément comprend un moyen de détermination de dispersion comprenant un moyen pour déterminer une gigue temporelle dans le signal après passage du signal le long de l'au moins une partie du chemin optique.

13. Le système de mesure de la revendication 12, dans lequel l'élément comprend un récepteur (3), et le récepteur (3) comprend un moyen pour récupérer une horloge à partir du signal, et dans lequel la gigue temporelle est déterminée à partir de l'horloge récupérée.

14. Le système de mesure de la revendication 12, dans lequel l'élément comprend un récepteur (3) et un régénérateur (4), le régénérateur comprenant une boucle d'asservissement de phase verrouillée sur une horloge récupérée émise par le récepteur (3), et dans lequel la gigue temporelle est déterminée en obtenant la différence de phase entre l'horloge récupérée et un signal de sortie de la boucle d'asservissement de phase.

15. Le système de mesure de l'une quelconque des revendications 12 à 14, comprenant un moyen pour calculer une valeur de dispersion de vitesse de groupe d'après la gigue temporelle.

16. Le système de mesure de l'une quelconque des revendications 12 à 15, comprenant un moyen pour appliquer une variation de longueur d'onde au signal transmis le long de l'au moins une partie du chemin optique, cette variation de longueur d'onde étant sous la forme d'une configuration prédéterminée.

**17.** Le système de mesure de la revendication 16, dans lequel le moyen pour appliquer la variation de longueur d'onde est également agencé pour surveiller ou modifier d'autres paramètres du système de transmission.

**18.** Le système de mesure de la revendication 16 ou 17, dans lequel la variation de longueur d'onde est un signal d'oscillation de fréquence basse pour atténuer la diffusion de Brillouin stimulée.

**19.** Le système de mesure de l'une quelconque des revendications 16 à 18, comprenant un moyen pour calculer une corrélation entre la gigue temporelle mesurée et la configuration prédéterminée.

**20.** Le système de mesure de l'une quelconque des revendications 16 à 19, dans lequel la configuration est asymétrique et le système comprend un moyen pour déterminer le signe de dispersion.

**21.** Le système de mesure de l'une quelconque des revendications 16 à 20, dans lequel la configuration est pseudo-aléatoire.

**22.** Le système de mesure de l'une quelconque des revendications 16 à 21, pour l'utilisation avec un système de transmission à multiplexage en longueur d'onde, comprenant une multiplicité de canaux multiplexés en longueur d'onde, dans lequel le moyen d'application de variation de longueur d'onde est agencé pour appliquer différentes configurations prédéterminées de variation de longueur d'onde aux différents canaux.

**23.** Un procédé de transmission de données le long d'un chemin optique dans un système de transmission optique, dans lequel le procédé comprend les étapes consistant à :

> déterminer une dispersion de vitesse de groupe dans au moins une partie du chemin optique, en même temps que les données sont transmises, et
>
> utiliser la valeur de dispersion de vitesse de groupe déterminée pour contrôler si elle dépasse un seuil, ou pour commander un flux de données, ou pour commander un dispositif ou un procédé de compensation de dispersion, ce procédé étant **caractérisé en ce que** l'étape de détermination d'une dispersion de vitesse de groupe comprend la détermination d'une gigue temporelle dans un signal comprenant les données transmises, après passage du signal le long de l'au moins une partie du chemin optique, et le calcul d'une valeur de dispersion de vitesse de groupe d'après la gigue temporelle.

*Figure 1*

OPTICAL DETECTOR 48

TUNABLE FILTER 45

47

TRANSMISSION CHARACTERISTIC MEASUREMENT 53

OPTICAL RECEIVER 42

TUNABLE FILTER 50

46

51

TUNABLE FILTER 50

46

51

TUNABLE LIGHT SOURCE 44

43

DRIVE CIRCUIT 49

SWEEP CONTROLLER 52

OPTICAL TRANSMITTER 41

Figure 2

EP 0 812 075 B1

Figure 3

Figure 4

**Figure 5**

Figure 6

EP 0 812 075 B1

Figure 7

EP 0 812 075 B1

Figure 8

CLOCK RECOVERY 72

PHASE DIFFERENCE DETECTOR → WIDEBAND FILTER → VCO → CK

EP 0 812 075 B1

Figure 9

FIGURE 10

EP 0 812 075 B1

## FIGURE 11